# EUROPEAN PATENT APPLICATION

(11) **EP 4 649 834 A1**
(43) Date of publication of application: **19.11.2025**
(21) Application number: 24741523.5
(22) Date of filing: 10.01.2024
(51) Int. Cl.: A23L 5/00, A23L 13/00, A23J 3/00, A23J 3/16, A23J 3/26

(54) **ADIPOSE TISSUE-LIKE FOOD**

(30) Priority: 10.01.2023 JP 2023001598
(71) Applicant: Showa Sangyo Co., Ltd., Tokyo 101-8521 (JP)
(72) Inventor: OKADA, Ayumi, Tokyo 101-8521 (JP); TANABE, Yuki, Tokyo 101-8521 (JP)
(74) Representative: De Clercq & Partners
(86) International application number: PCT/JP2024/000219
(87) International publication number: WO 2024/150750

(57) **Abstract**

It is an object of the present invention to develop a food like animal adipose tissue using a plant-based material. By blending rice flour, a vegetable protein, and a fat and/or oil based on the present invention, a food like animal adipose tissue can be obtained.

## Description

### TECHNICAL FIELD

The present invention relates to a food like animal adipose tissue.

### BACKGROUND ART

In recent years, many attempts to make foods like animal muscle tissues from plant materials have been made.

Of these, a vegetable protein such as soy protein has been widely considered as a material of a meat substitute, and for example, in Patent Literature 1, it is described that by using textured protein obtained by puffing soy protein, juicy feeling is imparted to a processed food. In Patent Literature 2, it is described that by using granular soy protein, a meat-like texture is imparted to a processed food.

### CITATION LIST

### PATENT LITERATURE

PTL1: Japanese Patent Laid-Open No. 2003-235461
PTL2: Japanese Patent Laid-Open No. 2018-126094

### SUMMARY OF INVENTION

### TECHNICAL PROBLEM

As described above, many attempts to make foods like animal muscle tissues using plant materials have been made, but on the other hand, attempts to make foods like animal adipose tissues using plant materials are not widely known, and such foods are not on the market.

In the light of such circumstances, it is an object of the present invention to develop technology to manufacture a food like animal adipose tissue using a plant-based material.

### SOLUTION TO PROBLEM

As a result of earnest studies on the above object, the present inventor has found that a food like animal adipose tissue is obtained using rice flour, a vegetable protein, and a fat and/or oil, and has accomplished the present invention.

The present invention includes, but is not limited to, the following inventions.
[1] An animal adipose tissue-like food including rice flour, a vegetable protein, and a fat and/or oil.
[2] The adipose tissue-like food according to [1], wherein the fat and/or oil contain a vegetable fat and/or oil.
[3] The food according to [1], wherein the vegetable protein contains soy protein.
[4] The food according to [1], wherein the vegetable protein contains soy protein isolate.
[5] The food according to [1], wherein the content of the rice flour is 1 to 15 mass%, the content of the vegetable protein is 1 to 15 mass%, and the content of the fat and/or oil is 20 to 60 mass%.
[6] The food according to [1], further containing starch.
[7] The food according to [1], further containing an oligosaccharide.
[8] The food according to [1], further containing a thickening agent.
[9] A method for manufacturing the food according any one of [1] to [8], including a step of mixing rice flour, a vegetable protein, a fat and/or oil, and water to prepare an emulsion, and a step of heating the emulsion to solidify it.
[10] A powder composition for manufacturing the food according to any one of [1] to [8], containing rice flour and a vegetable protein.
[11] An emulsion for manufacturing the food according to any one of [1] to [8], containing a vegetable protein, rice flour, a fat and/or oil, and water.
[12] A processed food including the adipose tissue-like food according to any one of [1] to [8].
[13] A method for manufacturing the processed food according to [12], including combining the adipose tissue-like food according to any one of [1] to [8] with a meat substitute.

### ADVANTAGEOUS EFFECTS OF INVENTION

According to the present invention, a food like animal adipose tissue can be obtained using a plant-based material. The food obtained by the present invention is particularly preferable as a meat substitute. Development of such a food may lead to suppression of use of water associated with livestock breeding and emission of greenhouse gases, and contribution to environmental load reduction can also be expected.

### BRIEF DESCRIPTION OF DRAWINGS

[Fig. 1] Fig. 1 is an appearance photograph of an animal adipose tissue-like food.
[Fig. 2] Fig. 2 is an appearance photograph of a material for a deep-fried food-like food (left: overall view, right: cross-sectional view).
[Fig. 3] Fig. 3 is an appearance photograph of a deep-fried chicken-like food (left: overall view, right: cross-sectional view).
[Fig. 4] Fig. 4 is an appearance photograph of a steamed chicken breast-like food.
[Fig. 5] Fig. 5 is an appearance photograph (cross-section) of a braised pork-like food.
[Fig. 6] Fig. 6 is an appearance photograph (cross-section) of a braised pork-like food.
[Fig. 7] Fig. 7 is an appearance photograph (cross-section) of a Char-siu pork-like food.

### DESCRIPTION OF EMBODIMENTS

The present invention relates to a food like animal adipose tissue (adipose tissue-like food). In the present invention, a food like animal adipose tissue can be obtained by mixing raw materials, such as rice flour, a vegetable protein, a fat and/or oil, and water, and heating them. A meat substitute that can achieve a meat muscle fiber-like texture and a meat-like substantial chewiness has been heretofore broadly studied, but according to the present invention, a food having a texture and an oily taste not like muscle tissue of animal meat but like adipose tissue can be obtained.

### Rice flour

The adipose tissue-like food according to the present invention contains rice flour, and due to this, a food having excellent shape retention properties and having a melt-in-your-mouth texture and an oily taste like animal adipose tissue can be achieved. In a preferred embodiment, the adipose tissue-like food according to the present invention contains 15 mass% or less of rice flour, and may contain 1 to 12 mass% or 2 to 10 mass% of rice flour.

The rice flour for use in the present invention is not particularly restricted as long as it is flour obtained by milling rice, and for example, non-glutinous rice or glutinous rice can be used as a raw material. The rice variety is not particularly limited, but for example, Japonica type, Indica type, Javanica type, or the like can be preferably used, and for example, from milled rice, half-milled rice, brown rice, crushed rice, or the like, rice flour may be manufactured. Examples of rice flours using glutinous rice as a raw material include Shiratamako (refined rice flour), glutinous rice flour or Gyuhi flour, Domyoji flour, Kanbai flour, and Rakugan flour, and examples of rice flours using non-glutinous rice as a raw material include Joshinko (Joyoko) and Karukan flour.

The particle diameter of the rice flour for use in the present invention is not particularly restricted, but for example, the median diameter (D50) in the cumulative distribution of particle diameters can be set to, for example, 20 to 110 µm, or may be set to 30 to 100 µm or 40 to 90 µm. In the case of such a particle diameter, the rice flour has excellent handling properties when handled and is easily mixed with other materials. Here, the particle size distribution of rice flour or the like can be measured by using a laser diffraction type particle size distribution measuring device, and the median diameter (D50) means a particle diameter obtained when the volume fraction of particles accumulated from small particle diameter becomes 50%.

The amount of damaged starch in the rice flour for use in the present invention is not particularly restricted, but for example, the amount of damaged starch can be set to 8 mass% or more, or may be set to 10 mass% or more, 15 mass% or more, or 20 mass% or more. The amount of damaged starch in the rice flour can be set to, for example, 50 mass% or less, or may be set to 45 mass% or less, or 40 mass% or less. Here, the amount (mass%) of damaged starch refers to the amount of starch suffering damage in the total amount of the rice flour, and the damaged starch refers to starch whose particles have been mechanically damaged by pressure, impact, or the like when the rice is ground. The amount (mass%) of damaged starch can be measured in accordance with AACC Method 76-31. Specifically, the measurement is made by breaking only the damaged starch contained in a sample down into maltosaccharide and limit dextrin with mold-derived α-amylase, subsequently breaking it down into glucose with amyloglucosidase, and determining glucose produced. The measurement may be made using a commercially available kit (for example, Starch Damage Assay Kit (manufactured by Megazyme Ltd.)).

The rice flour for use in the present invention may be manufactured by milling raw material rice by a known method, and the milling method is not particularly restricted. In one embodiment, uncooked rice may be ground by shear grinding or friction grinding, and examples of grinding devices include a grinder equipped with a millstone or the like and a ball mill. Examples of commercially available grinders include, but not limited to, "Usu-hiki Shokunin" (KANRYU CORPORATION), "Micro Powder" (manufactured by West Co., Ltd.), and "Ball Mill" (Retsch GmbH).

### Vegetable protein

The adipose tissue-like food according to the present invention contains a vegetable protein together with rice flour, and due to this, a food having excellent shape retention properties and having a melt-in-your-mouth texture and an oily taste like animal adipose tissue can be achieved. In a preferred embodiment, the adipose tissue-like food according to the present invention contains 15 mass% or less of a vegetable protein, and may contain 1 to 12 mass% or 2 to 10 mass% of a vegetable protein.

The raw material of the vegetable protein is not particularly restricted, and various vegetables can be used, but for example, beans such as soybean, wheat, and rapeseed can be preferably used, and use of beans is preferable. Examples of beans include beans of Glycine max., Vigna, Phaseolus, Vicia, Pisum, Arachis, Chickpea, and Lentil, and preferred beans are soy protein, pea protein, and mung bean protein. When soy protein is used as the vegetable protein, for example, a defatted soy flour, and powders of soy protein isolate, soy protein concentrate, soy milk and the like can be used, and it is preferable to use soy protein isolate or soy protein concentrate.

The protein content of the vegetable protein according to the present invention is preferably 70% or more, and may be, for example, 75 to 99% or 80 to 98%. The protein content of the vegetable protein can be measured by the Kjeldahl method (nitrogen conversion factor 6.25).

In the present invention, of the essential raw materials for manufacturing the adipose tissue-like food, the rice flour and the vegetable protein may be mixed in advance to prepare a powder composition. In the powder composition, other components described later can be appropriately blended.

### Fat and/or oil

The adipose tissue-like food according to the present invention contains a fat and/or oil as essential components in addition to the rice flour and the vegetable protein. The fat and/or oil for use in the present invention is not particularly restricted as long as it is edible fat and/or oil, and one type of fat and/or oil may be used, or multiple types of fat and/or oil may be used in combination. The amount of the fat and/or oil used is not particularly restricted, and may be appropriately prepared according to the use purpose, but the amount is preferably set to 20 to 60 mass% of the adipose tissue-like food, or may be set to 25 to 55 mass% or 30 to 50 mass% thereof.

Examples of the fat and/or oil for use in the present invention include vegetable fats and oils, such as soybean oil, rapeseed oil (including canola oil), corn oil, sunflower oil, safflower oil, cottonseed oil, sesame oil, perilla oil, linseed oil, peanut oil, olive oil, grapeseed oil, macadamia nut oil, hazel nut oil, pumpkin seed oil, walnut oil, camellia oil, tea seed oil, perilla oil, borage oil, rice bran oil, wheat germ oil, palm oil, palm kernel oil, coconut oil, and cocoa butter; animal fats and oils, such as beef tallow, lard, chicken fat, milk fat, fish oil, whale oil, and seal fat; and algae oils. Fats and oils extracted from vegetables having been subjected to breed improvement using genetic engineering techniques are also available, and for example, in the case of rapeseed oil, sunflower oil, safflower oil, soybean oil, etc., fats and oils obtained from varieties of high-oleic types having been increased in oleic acid content can be used. In the present invention, processed fats and oils can also be appropriately used. For example, hydrogenated fats and oils, esterified oils of glycerol and fatty acid, transesterified oils, fractionated fats and oils, etc. can be appropriately used, and specific examples thereof include shortening and medium-chain triglyceride. The adipose tissue-like food according to the present invention preferably contains, as a fat and/or oil, a vegetable fat and/or oil because it is easily mixed with other raw materials and have good workability in the manufacture of the adipose tissue-like food. The vegetable fat and/or oil is preferably a vegetable oil that is liquid at ordinary temperature (20°C), and for example, soybean oil, rapeseed oil (including canola oil), corn oil, sunflower oil, rice bran oil, olive oil, and sesame oil are preferable.

The fat and/or oil according to the present invention can be manufactured through general steps, and examples of the steps include oil extraction step, degumming step, deacidification step, decolorization step, deodorization step, and dewaxing step. The oil extraction step can be carried out by subjecting the raw materials such as seeds and animal fat to squeezing, solvent extraction, elution, or the like, and when a plurality of oil extraction steps are carried out, fats and oils obtained in the oil extraction steps may be mixed.

When the vegetable fat and/or oil is used in the adipose tissue-like food according to the present invention, it may be used in combination with animal fats and oils, algae oils, and synthetic oils. When the animal fats and oils or the algae oils are used, beef tallow, lard, chicken fat, milk fat, fish oil, seal fat, algae oils, and the like may be used singly or in combination, and lard that is fat obtained by purification of adipose tissue of the hog can be preferably used.

To the fat and/or oil according to the present invention, additives usually used can be added when needed. Such additives are intended for, for example, improvement in storage stability, improvement in oxidation stability, improvement in heat stability, crystal suppression at low temperatures, improvement in emulsion stability, viscosity adjustment, coloring, perfuming, and anti-foaming, and specific examples include emulsifying agents, such as glycerol fatty acid ester, polyglycerol fatty acid ester, sucrose fatty acid ester, sorbitan fatty acid ester, organic acid monoglyceride, polysorbate, and lecithin, antioxidants, such as tocopherol, ascorbic acid fatty acid ester, lignan, tea extract, coenzyme Q, and oryzanol, organic acid salts, such as sodium malate and sodium citrate, coloring matters, such as β-carotene, perfumes, and silicone.

### Other components

The adipose tissue-like food according to the present invention may contain auxiliary materials, such as carbohydrates, e.g., starch, oligosaccharide, and monosaccharide, dietary fibers, coloring matters, seasonings, perfumes, emulsifying agents, thickening agents, organic acids, salts, and vitamins, and only one of these auxiliary materials may be used, or two or more thereof may be used.

In a preferred embodiment of the present invention, the adipose tissue-like food contains starch. By allowing the adipose tissue-like food to contain starch, the melt-in-your-mouth texture and shape retention properties of the adipose tissue-like food can be further improved. The amount of the starch used is not particularly restricted, and it may be adjusted according to the embodiment, but for example, the amount thereof is preferably set to 10 mass% or less of the adipose tissue-like food, and can be set to 0.1 to 8 mass% or 0.5 to 5 mass% thereof. The raw material of the starch is not particularly restricted either, and examples thereof include wheat starch, potato starch, tapioca starch, Sago starch, rice starch, sweet potato starch, and corn starch, and these may be each waxy type or high-amylose type. The starch may be raw starch or may be modified starch obtained by subjecting raw starch to physical or chemical (also including enzymatic treatment) modification, and as the modified starches, for example, pregelatinized starch; fat and oil modified starch; heat-moisture treated starch; oxidized starch; bleached starch; acid-treated starch; esterified starches, such as acetylated starch, octenylsuccinate starch, and phosphate starch; etherified starches, such as hydroxypropyl starch; crosslinked starches, such as distarch phosphate and distarch adipate; modified starches obtained by combining a plurality of these modifications; and resistant starches obtained by modifying raw starch or modified starch so as to have resistance to digestive action of digestive enzyme can be preferably used. Preferred are raw starch, octenylsuccinate starch, hydroxypropyl starch, and pregelatinized starch, and more preferred is octenylsuccinate starch.

In the present invention, it is preferable to allow the adipose tissue-like food to contain oligosaccharide from the viewpoint of flavor, etc. The oligosaccharide in the present invention is a carbohydrate in which 2 to 10 monosaccharides are bonded. Particularly, isomalto-oligosaccharide is preferable. The isomalto-oligosaccharide means oligosaccharide having an α-1,6 bond made up of glucose, such as isomaltose, isomaltotriose, or panose. It is preferable to blend 1 to 6 mass% of the oligosaccharide, or 1.3 to 5 mass% or 1.6 to 4.5 mass% thereof may be blended.

In the adipose tissue-like food, a thickening agent can be contained. Examples of the thickening agents include pectin, methyl cellulose, hydroxypropyl methyl cellulose, carboxymethyl cellulose, glucomannan, xanthan gum, guar gum, locust beam gum, Tara gum, tamarind gum, carrageenan, gum arabic, tremel gum, alginic acid, sodium alginate, alginic acid ester (propylene glycol alginate), calcium alginate, psyllium seed gum, gellan gum, and curdlan. The amount of the thickening agent blended is preferably 0.05 to 2 mass%, or may be 0.1 to 5 mass% or 0.3 to 1 mass%.

In a preferred embodiment, the water content in the adipose tissue-like food according to the present invention is 20 to 70 mass%, or may be 30 to 65 mass% or 40 to 60 mass%. In the case of such a water content, a melt-in-your-mouth texture and smoothness like animal adipose tissue can be easily achieved in the adipose tissue-like food.

### Manufacture of adipose tissue-like food

The adipose tissue-like food according to the present invention can be manufactured by mixing raw materials, such as rice flour, a vegetable protein, a fat and/or oil, and water, and heating them. That is to say, the adipose tissue-like food according to the present invention can be obtained by mixing rice flour, a vegetable protein, a fat and/or oil, and water to prepare an emulsion and then heating the emulsion to solidify it.

In the present invention, the mixing method and the heating method are not particularly restricted, and known methods can be used. When the raw materials are mixed, a known stirring device can be used, and for example, a device to mix the raw materials with a stirring blade, such as a food processor, a silent cutter, a hand mixer, or a vertical mixer, can be used. For the mixing, all the raw materials may be mixed at once, or the raw materials may be introduced in stages and mixed. For heating a mixture of the raw materials, for example, the mixture may be placed in a container and heated by a method of a hot water bath, a microwave oven, a steamer, a steam convection oven, or the like. The container used during heating is not particularly restricted, and a flexible resin container or the like can be preferably used.

The adipose tissue-like food according to the present invention can be easily adjusted to a desired size. The size of the adipose tissue-like food may be adjusted by the amount of the mixture of the raw materials or the container when the mixture is heated, or may be appropriately adjusted after heating. When the size is adjusted after the adipose tissue-like food is manufactured, for example, the size may be adjusted by hands, or a known device such as a cutting machine may be used.

The adipose tissue-like food according to the present invention may be subjected to heat treatment for sterilization or the like, or may be refrigerated/frozen for storage or the like. The adipose tissue-like food according to the present invention may be placed in a packaging container and stored, or vacuum packaging or modified atmosphere packaging may be carried out. Examples of shapes of the packaging containers include shapes of a tray, a pack, a cup, and a bag, and a material, such as paper, resin, or metal, may be appropriately selected. The adipose tissue-like food may be canned or bottled. The adipose tissue-like food according to the present invention can be eaten as it is, but may be eaten after it is cooked by a known method. When cooking with heat is carried out, the method therefor is not particularly limited, and examples of the methods include baking, steaming, warming in hot water, braising, deep frying, smoking, microwave oven cooking, and retort pouch cooking.

### Use of adipose tissue-like food

By allowing a processed food to contain the adipose tissue-like food according to the present invention, a texture and an oily taste like adipose tissue can be imparted to the processed food. In the present invention, by using the adipose tissue-like food in a processed food containing meat, a texture and an oily taste like adipose tissue can be strengthened, or by using the adipose tissue-like food in a processed food containing no meat, a texture and an oily taste like adipose tissue can be imparted to the processed food. Here, meat in the present invention typically means meat, such as beef, pork, or chicken, and has the concept including edible parts of mammals, such as cows, pigs, sheep, and horses, birds, such as chicken and duck, fishes, etc.

The method to allow a processed food to contain the adipose tissue-like food is not particularly restricted, and for example, after the adipose tissue-like food is manufactured, it may be combined with other materials to prepare a processed food, or when the adipose tissue-like food is manufactured, other materials are combined to prepare a processed food. In one embodiment of the present invention, after an adipose tissue-like food is manufactured, the adipose tissue-like food may be appropriately adjusted in its size and combined with other materials for use in a processed food. In another embodiment, raw materials in an emulsion state (state before being solidified by heating) obtained by mixing rice flour, a vegetable protein, a fat and/or oil, water, etc. may be mixed with other materials and then heated to prepare a processed food containing the adipose tissue-like food.

For example, in a preferred embodiment, by combining the adipose tissue-like food according to the present invention with a conventional plant-based meat substitute that imitates animal meat muscle tissue, a processed food like real meat having muscle tissue and adipose tissue can be manufactured from vegetable raw materials only. The mean substitute to be combined with the adipose tissue-like food according to the present invention is not particularly restricted, and a known meat substitute can be used. Examples of the plant-based meat substitutes using vegetables as raw materials include those using beans, such as soybeans and peas, or wheat as raw materials, examples of commercial products include Daizu Labo (Marukome Co., Ltd.) and Mametan (Showa Sangyo Co., Ltd.), and in addition, various meat substitutes from The Vegetarian Butcher, etc. are on the market. By combining the adipose tissue-like food according to the present invention with a meat substitute that is a non-puffed extrusion molded product of a vegetable protein such as soy protein, a juicy processed food having a meat-like texture but having a sufficient oily taste can be manufactured. The combining method is not particularly restricted, and they may be mixed simply, or the adipose tissue-like food and the meat substitute may be molded together. For example, rolling into a wad, overlaying in layers, winding into a roll after overlaying in layers, wrapping the adipose tissue-like food with a meat substitute, or wrapping a meat substitute with the adipose tissue-like food can be carried out. After molding or after molding and heating, the adipose tissue-like food can be cut into desired size or shape (block shape, slice shape, minced shape, etc.). It is preferable to subject the meat substitute to treatment that causes cracks on the surface by shredding the meat substitute in advance or carrying out rolling with a roller because such a meat substitute is more easily molded when it is combined with the adipose tissue-like food. For the molding, a material for binding may be used. Examples of the materials for binding include protein-based materials such as albumen powder, enzymes such as transglutaminase, starch, and a gelling agent, and a powdery substance may be dusted or may be dispersed in a liquid such as water and applied.

In one embodiment, the present invention includes a processed food in which the adipose tissue-like food is blended. In the present invention, water, fats and oils, vegetables, fruits, seaweeds, seasonings, spices, thickening agents, gelling agents, carbohydrates, dietary fibers, coloring agents, perfumes, other vegetable/animal proteins, etc. may be blended in the food as long as they do not impair the effects of the present invention. Examples of the vegetables include onion, carrot, and green pepper, and examples of the seasonings include garlic, ginger, chili pepper, pepper, soy sauce, and Miso.

By coating the adipose tissue-like food according to the present invention with breadcrumbs or a batter liquid or by wrapping it with covering for filled foods or bakery dough, when needed, a desired processed food can be manufactured. Moreover, a processed food can also be manufactured by mixing the adipose tissue-like food and a meat substitute, and then using batter, covering for filled foods, bakery dough or the like. Here, examples of the batter, the covering for filled foods, and the bakery dough include those prepared by using cereal flours, such as wheat flour, buckwheat flour, and corn flour, or starches.

### EXAMPLES

Details of the present invention will be further described based on specific examples, but the present invention is not limited to the following examples. Unless otherwise noted, the concentration and the like herein are on a mass basis, and a numerical range is described to include its endpoints.

### Experiment 1: manufacture and evaluation of adipose tissue-like food

### 1-1: Manufacture of adipose tissue-like food

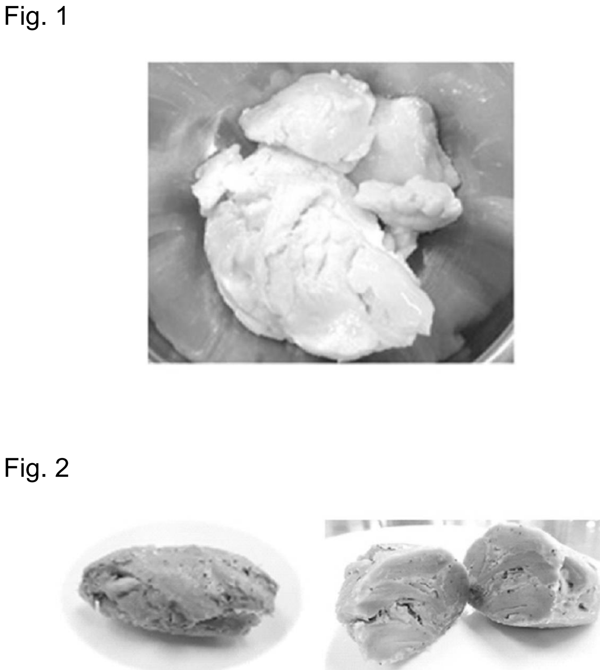

Materials described below were introduced into a food processor according to the formulation shown in the table below, and they were stirred for 3 to 5 minutes until they became a homogeneously emulsified liquid-like or smooth paste-like emulsion. About 100 g of the resulting emulsion was placed in a resin bag, and boiled in boiling water for about 10 minutes to manufacture an animal adipose tissue-like food (Fig. 1).

### (Fat and oil)

· High-oleic sunflower oil (Olein-Rich, Showa Sangyo Co., Ltd.)
· Lard (pure lard, MEGMILK SNOW BRAND Co., Ltd.)

### (Vegetable protein)

· Soy protein isolate (protein content: 86%, Showa Fresh M-600, Showa Sangyo Co., ltd.)
· Pea protein (protein content: 80%, PP-CS, Organo FoodTech Corporation)
· Mung bean protein (protein content: 82%, MP-AC, Organo FoodTech Corporation)

### (Cereal flour)

· Rice flour A (commercial product, median diameter: about 50 µm, KOMEKO POWDER, Mitake Food Manufacturing Co., Ltd.)
· Rice flour B (own product, median diameter: about 40 µm, amount of damaged starch 14 mass%): obtained by dry grinding non-glutinous rice with an airflow type grinding machine (cyclone mill; Cyclone Mill 250W, Shizuoka Plant Co., Ltd.)
· Rice flour C (own product, median diameter: about 80 µm, amount of damaged starch 22 mass%): obtained by dry grinding non-glutinous rice with a mortar type grinding machine

### (Usu-hiki Shokunin KP091, KANRYU CORPORATION)

· Wheat flour (Qualitat, Showa Sangyo Co., Ltd.)

### (Starch)

· Raw starch (potato starch, Bihoro Chiho Nosan Kako Agricultural Cooperative Association)
· Octenylsuccinate starch (Nyuka L, NIPPON STARCH CHEMICAL CO., LTD.)
· Hydroxypropyl starch (SF-4000, Showa Sangyo Co., Ltd.)
· Pregelatinized starch (S600Y, Showa Sangyo Co., Ltd.)

### (Others)

· Oligosaccharide syrup (isomalto-oligosaccharide content: 70%, Malminose, Showa Sangyo Co., Ltd.)
· Thickening agent (methyl cellulose, Heat Gel Katame, UNITEC FOODS CO., LTD.)

### 1-2. Evaluation of adipose tissue-like food

Sensory evaluation of a boiled adipose tissue-like food was performed by 10 trained panelists. The evaluation was performed on a five-point scale based on the following criteria, and the average score was calculated.
■Shape retention properties (appearance evaluation)
   5 (very good): The adipose tissue-like food is well solidified, and well maintains its shape.
   4 (good): The adipose tissue-like food is solidified, and maintains its shape.
   3 (fair): The adipose tissue-like food almost maintains its shape.
   2 (poor): The adipose tissue-like food is not firmly solidified, and has a slightly collapsed shape.
   1 (very poor): The adipose tissue-like food is not solidified, and has a collapsed shape.
■Melt-in-your-mouth texture
   5 (Very good): The adipose tissue-like food is extremely fine-grained and smooth, and has an extremely good melt-in-your-mouth texture.
   4 (Good): The adipose tissue-like food is fine-grained and smooth, and has a good melt-in-your-mouth texture.
   3 (Fair): The adipose tissue-like food slightly feels rough, but has a good melt-in-your-mouth texture.
   2 (Poor): The adipose tissue-like food feels rough, and slightly remains in the mouth.
   1 (Very poor): The adipose tissue-like food strongly feels rough, and remains in the mouth.
**■Oily** taste
   5 (Very good): The adipose tissue-like food has a strong oily taste like animal adipose tissue.
   4 (Good): The adipose tissue-like food has an oily taste like animal adipose tissue.
   3 (Fair): The adipose tissue-like food slightly has an oily taste like animal adipose tissue.
   2 (Poor): The adipose tissue-like food hardly has an oily taste like animal adipose tissue.
   1 (Very poor): The adipose tissue-like food does not have an oily taste like animal adipose tissue at all.

**[Table 1]**

| Sample No. | | 1-1 Comparative Example | 1-2 | 1-3 | 1-4 | 1-5 | 1-6 | 1-7 Comparative Example | 1-8 Comparative Example | 1-9 | 1-10 Comparative Example | 1-11 Comparative Example | 1-12 | 1-13 | 1-14 |
|---|---|---|---|---|---|---|---|---|---|---|---|---|---|---|---|
| | Soy protein isolate | 12.5 | 7.0 | 5.5 | 2.0 | | | | 5.5 | 5.5 | | 5.5 | 5.5 | 5.5 | 5.5 |
| | Pea protein | | | | | 5.5 | | | | | | | | | |
| | Mung bean protein | | | | | | 5.5 | | | | | | | | |
| | Rice flour A | | 5.5 | 7.0 | 10.5 | 7.0 | 7.0 | 12.5 | | 4.5 | 7.0 | | 4.5 | | |
| | Rice flour B | | | | | | | | | | | | | 4.5 | |
| | Rice flour C | | | | | | | | | | | | | | 4.5 |
| Formulation (part(s) by mass) | Wheat flour | | | | | | | | 7.0 | | | | | | |
| | (Starch) octenylsuccinate starch | | | | | | | | | 2.5 | 5.5 | 7.0 | 2.5 | 2.5 | 2.5 |
| | (Fat and oil) High-oleic sunflower oil | 40.0 | 40.0 | 40.0 | 40.0 | 40.0 | 40.0 | 40.0 | 40.0 | 40.0 | 40.0 | 40.0 | | 40.0 | 40.0 |
| | (Fat and oil) Lard | | | | | | | | | | | | 40.0 | | |
| | Water | 47.5 | 47.5 | 47.5 | 47.5 | 47.5 | 47.5 | 47.5 | 47.5 | 47.5 | 47.5 | 47.5 | 47.5 | 47.5 | 47.5 |
| | (Total) | 100 | 100 | 100 | 100 | 100 | 100 | 100 | 100 | 100 | 100 | 100 | 100 | 100 | 100 |
| Evaluation | Shape retention properties (appearance) | 3.0 | 4.0 | 3.5 | 3.2 | 3.5 | 3.5 | 2.0 | 4.5 | 4.7 | 2.2 | 2.6 | 4.7 | 4.7 | 5.0 |
| | Melt-in-your-mouth | 1.9 | 3.0 | 3.5 | 3.5 | 3.3 | 3.3 | 3.3 | 1.5 | 4.9 | 4.0 | 4.2 | 4.9 | 4.9 | 5.0 |
| | Oily taste | 2.4 | 3.0 | 3.5 | 3.5 | 3.5 | 3.8 | 4.0 | 2.0 | 4.9 | 4.0 | 4.1 | 4.9 | 4.9 | 5.0 |

| Sample No. | | 1-15 | 1-16 | 1-17 | 1-18 | 1-19 | 1-20 | 1-21 | 1-22 | 1-23 | 1-24 | 1-25 | 1-26 | 11-27 |
|---|---|---|---|---|---|---|---|---|---|---|---|---|---|---|
| | Soy protein isolate | 5.5 | 5.5 | 5.5 | 5.5 | 2.0 | 8.0 | 5.5 | 5.5 | 5.5 | 5.5 | 5.5 | 5.5 | 5.5 |
| | Rice flour A | 4.5 | 4.5 | 4.5 | 4.5 | 8.0 | 2.0 | 6.0 | 2.0 | 4.5 | 4.5 | 4.5 | 4.5 | 4.5 |
| | (Starch) octenylsuccinate starch | 2.5 | | | | 2.5 | 2.5 | 1.0 | 5.0 | 2.5 | 2.5 | 2.5 | 2.5 | 2.5 |
| | (Starch) Raw starch | | 2.5 | | | | | | | | | | | |
| | (Starch) Hydroxypropyl starch | | | 2.5 | | | | | | | | | | |
| Formulation (part(s) by mass) | (Starch) Pregelatinized starch | | | | 2.5 | | | | | | | | | |
| | (Oligosaccharide) Oligosaccharide syrup | | | | | | | | | | | 2.5 | 6.0 | |
| | (Thickening agent) Methyl cellulose | | | | | | | | | | | | | 0.5 |
| | (Fat and oil) High-oleic sunflower oil | 40.0 | 40.0 | 40.0 | 40.0 | 40.0 | 40.0 | 40.0 | 40.0 | 33.0 | 47.5 | 40.0 | 40.0 | 40.0 |
| | Water | 47.5 | 47.5 | 47.5 | 47.5 | 47.5 | 47.5 | 47.5 | 47.5 | 54.5 | 40.0 | 45.0 | 41.5 | 47.0 |
| | (Total) | 100 | 100 | 100 | 100 | 100 | 100 | 100 | 100 | 100 | 100 | 100 | 100 | 100 |
| Evaluation | Shape retention properties (appearance) | 4.7 | 4.8 | 4.7 | 4.8 | 3.2 | 4.9 | 4.5 | 4.7 | 3.1 | 4.8 | 4.7 | 4.7 | 5.0 |
| | Melt-in-your-mouth | 4.9 | 4.0 | 4.4 | 3.5 | 4.5 | 3.2 | 4.9 | 4.0 | 4.0 | 3.1 | 4.9 | 4.9 | 5.0 |
| | Oily taste | 4.9 | 4.2 | 4.1 | 4.0 | 4.8 | 3.3 | 4.5 | 4.5 | 4.0 | 3.2 | 4.9 | 4.9 | 5.0 |

As shown in the table above, foods having an appearance and a texture like animal adipose tissue were able to be obtained using a fat and an oil, vegetable proteins, and rice flours. That is to say, as is clear from the results of Samples 1-2 to 1-6, by using vegetable proteins and rice flours in combination based on the present invention, textures (melt-in-your-mouth, oily taste) like animal adipose tissue were able to be achieved.

When the amount of a rice flour blended was increased, the shape retention properties tended to slightly decrease. Particularly when any vegetable protein (soy protein isolate) was not used and a rice fluor was only used, the shape retention properties of the adipose tissue-like food were poor, and the shape was slightly collapsed (Samples 1-7, 1-10). When wheat flour was used instead of rice flours, textures (melt-in-your-mouth, oily taste) like animal adipose tissue were not able to be achieved (Sample 1-8). When any rice flour was not used and a vegetable protein (soy protein isolate) was only used, textures (melt-in-your-mouth, oily taste) like animal adipose tissue were not able to be achieved (Sample 1-1). When a rice flour containing a large amount of damaged starch was used, the shape retention properties and textures (melt-in-your-mouth, oily taste) were better.

When a starch was further blended in addition to a fat or an oil, a vegetable protein, and a rice flour, the shape retention properties and textures (melt-in-your-mouth, oily taste) were able to be made superior (Samples 1-9, 1-12 to 1-27). When an oligosaccharide (Malminose) was further blended, an adipose tissue-like food having good shape retention properties, melt-in-your-mouth, and oily taste and having an even better flavor was able to be obtained (Samples 1-25, 1-26).

When the amount of an oil blended was about 30 to 50 parts by mass, the shape retention properties and textures (melt-in-your-mouth, oily taste) were both particularly excellent (Samples 1-15, 1-23, 1-24). Even when lard that was an animal fat was used as the fat and/or oil, an adipose tissue-like food having good shape retention properties and textures (melt-in-your-mouth, oily taste) was able to be obtained. When a thickening agent (methyl cellulose) was further blended, an adipose tissue-like food having good shape retention properties and textures (melt-in-your-mouth, oily taste) and having a particularly good feel on the tongue was able to be obtained.

### Experiment 2: Manufacture and evaluation of processed food (deep-fried chicken-like food)

Using the adipose tissue-like food (Sample 1-9) manufactured in Experiment 1, a deep-fried chicken-like food was manufactured. Specifically, as an animal muscle tissue-like food, a non-puffed extrusion molded product using soybeans as raw materials was used, and from a chicken thigh-like dough that was a combination of this and the adipose tissue-like food manufactured in Experiment 1, deep-fried chicken was manufactured.

(Manufacture of muscle tissue-like food) 100 Parts by mass of a raw material powder obtained by mixing 80 parts by mass of defatted soy flour (Showa Sangyo Co., Ltd.) and 20 parts by mass of soy protein isolate (Showa Fresh M-600, Showa Sangyo Co., Ltd.), and 120 parts by mass of water were introduced into a twin-screw extruder (Alpharizer EA-20, suehiroepm Inc.), and they were kneaded. In the twin-screw extruder, at the first half of the barrel, the temperature was stepwise increased from 30 to 140°C, near the barrel center, the temperature was maintained at 140 to 180°C, and at the second half of the barrel, the temperature was stepwise decreased from 140 to 100°C. While cooling water in a cooling die (opening area 700 mm², length 600 mm) installed at the tip was circulated to cool the textured product so that the stop temperature of the textured product at the outlet might become 85°C, the textured product was extruded, and it was appropriately cut perpendicularly to the extrusion direction to manufacture a muscle tissue-like meat substitute (cross-sectional area: 700 mm², length: 200 mm).

(Preparation of chicken thigh-like dough) The muscle tissue-like food (non-puffed extrusion molded product using soybeans as raw materials) manufactured as above was split with hands into a size of about 1 to 4 cm, and parboiled in boiling water for 30 seconds. Subsequently, materials described in the table below were mixed to prepare chicken thigh-like dough.

**[Table 2-1]**

| Table. Materials of chicken thigh-like dough (part(s) by mass) | |
|---|---|
| Materials | Formulation |
| Muscle tissue-like food | 500 |
| Adipose tissue-like food | 80 |
| Sugar | 12 |
| Salt | 10 |
| Other seasonings (consomme, etc.) | 8 |
| Total | 610 |

(Manufacture of deep-fried chicken-like food) Seasonings described in the table below were mixed with the chicken thigh-like dough to season the dough, and then the dough was molded into a spherical shape and joined together to prepare a material for deep frying (30 g/piece, diameter: about 4 cm, Fig. 2).

**[Table 2-2]**

| Table. Seasoning of material for deep frying (part(s) by mass) | |
|---|---|
| Materials | Formulation |
| Chicken thigh-like dough | 81.6 |
| Ginger | 1.3 |
| Garlic | 1.3 |
| Cooking sake | 1.0 |
| Soy sauce | 1.0 |
| Sugar | 0.5 |
| Vegetable oil | 9.2 |
| Albumen | 4.1 |
| Total | 100 |

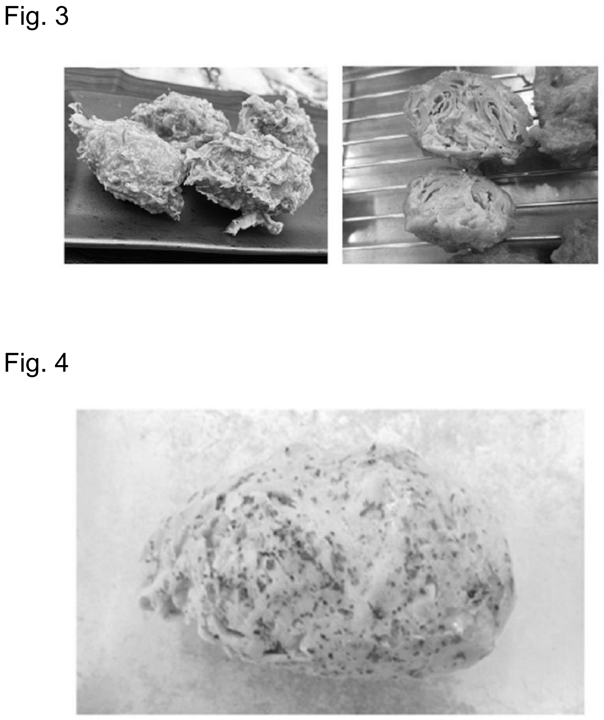

To the material prepared as above, a deep-frying batter (obtained by adding 100 parts by mass of water to 100 parts by mass of a deep-frying flour and mixing them) was allowed to adhere, and the material was deep-fried at 170°C for 5 minutes to manufacture a deep-fried food (Fig. 3).

The deep-fried food manufactured was sampled, and as a result, it had chewiness and a juicy oily taste, and it had a texture like deep-fried chicken thigh.

### Experiment 3: Manufacture and evaluation of processed food (steamed chicken breast-like food)

Materials were introduced into a food processor according to the formulation of Sample 1-9 of Experiment 1, and stirred for about 4 minutes to obtain a smooth paste-like emulsion (adipose tissue-like food not solidified by heating). As a muscle tissue-like food, the muscle tissue-like food (non-puffed extrusion molded product using soybeans as raw materials) manufactured in Experiment 2 was split with hands into a size of about 1 to 4 cm, parboiled in boiling water for 30 seconds, and used. Subsequently, materials were mixed according to the formulation described in the table below to prepare dough for a steamed chicken breast-like food.

**[Table 3]**

| Table. Materials of dough for steamed chicken breast-like food (part(s) by mass) | |
|---|---|
| Materials | Formulation |
| Muscle tissue-like food | 700 |
| Adipose tissue-like food (emulsion) | 82 |
| Sugar | 11 |
| Salt | 7 |
| Lemon juice | 45 |
| Albumen powder | 30 |
| Other seasonings (herbal salt, etc.) | 25 |
| Total | 900 |

The dough prepared as above was molded, placed in a resin bag, sealed therein, and boiled in boiling water for about 10 minutes to prepare a steamed chicken breast-like food (100 g/piece, Fig. 4).

The steamed chicken breast-like food manufactured was sampled, and as a result, it had chewiness and moderate juiciness, and it had a moist texture and a texture like steamed chicken breast.

### Experiment 4: Manufacture and evaluation of processed food

### (1) Braised pork-like food 1

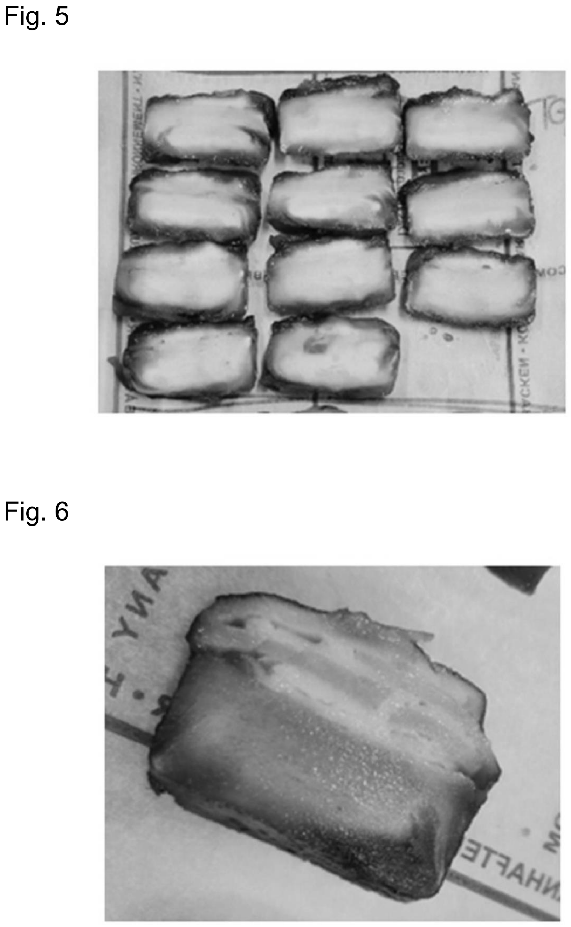

Materials were introduced into a food processor according to the formulation of Sample 1-9 of Experiment 1, and stirred for about 4 minutes to obtain a smooth paste-like emulsion (adipose tissue-like food not solidified by heating). As a muscle tissue-like food, the muscle tissue-like food (non-puffed extrusion molded product using soybeans as raw materials, 12 cm × 4.5 cm × 1.5 cm, about 100 g) manufactured in Experiment 2 was placed in a pound cake pan, thereto was applied a dispersion obtained by dispersing modified starch (SF-1700, Showa Sangyo Co., Ltd.) in an equivalent amount of water with a blush, and thereon, 20 g of the emulsion (adipose tissue-like food not solidified by heating) was spread. The resulting product was heated in a steam convection oven for 10 minutes and then cooled at 4°C for 60 minutes. Subsequently, it was braised with a seasoning liquid described in the table below for 20 minutes to obtain a braised pork-like food (Fig. 5, 12 cm × 4.5 cm × 2 cm).

The braised pork-like food manufactured was sampled, and as a result, it had chewiness like meat and an oily taste like fat with a good balance, and it had a texture like braised pork.

**[Table 4]**

| Table. Braising seasoning liquid (part(s) by mass) | |
|---|---|
| Materials | Formulation |
| Water | 32 |
| Vegetable oil | 5 |
| Soy sauce | 16 |
| Cooking sake | 16 |
| Sweetened sake | 8 |
| Sugar | 8 |
| Total | 85 |

### (2) Braised pork-like food 2

Materials were introduced into a food processor according to the formulation of Sample 1-9 of Experiment 1, and stirred for about 4 minutes to obtain a smooth paste-like emulsion (adipose tissue-like food not solidified by heating). As a muscle tissue-like food, the muscle tissue-like food (non-puffed extrusion molded product using soybeans as raw materials, 12 cm × 4.5 cm × 1.5 cm, about 100 g) manufactured in Experiment 2 was placed in a pound cake pan, then modified starch was thinly dusted, and thereon, 10 g of the emulsion (adipose tissue-like food not solidified by heating) was spread. Further, the muscle tissue-like food (12 cm × 4.5 cm × 0.3 cm, about 20 g) was overlaid thereon, then modified starch was thinly dusted, and 7.5 g of the emulsion (adipose tissue-like food not solidified by heating) was spread. The resulting product was heated in a steam convection oven for 10 minutes and then cooled at 4°C for 60 minutes. Subsequently, it was braised with the seasoning liquid described above for 20 minutes to obtain a braised pork-like food (Fig. 6, 12 cm × 4.5 cm × 2.5 cm).

The braised pork-like food manufactured was sampled, and as a result, it had chewiness like meat and an oily taste like fat with a good balance, and it had a texture like braised pork. Further, it also had an appearance closer to braised pork because the muscle tissue-like portion and the adipose tissue-like portion were multilayered.

### (3) Char-siu pork-like food

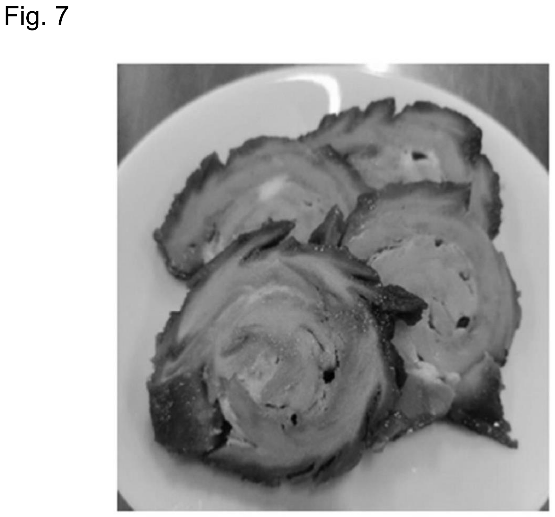

Materials were introduced into a food processor according to the formulation of Sample 1-9 of Experiment 1, and stirred for about 4 minutes to obtain a smooth paste-like emulsion (adipose tissue-like food not solidified by heating). As a muscle tissue-like food, a muscle tissue-like food (25 cm × 5 cm × 1.5 cm,) obtained by subjecting the muscle tissue-like food (non-puffed extrusion molded product using soybeans as raw materials, about 160 g) manufactured in Experiment 2 to rolling to create cracks on the surface was used. On the muscle tissue-like food, modified starch was thinly dusted, and 30 g of the emulsion (adipose tissue-like food not solidified by heating) was spread. The resulting product was rolled into a roll with the emulsion-spread surface facing inwards, placed in a circle pan, heated in a steam convection oven for 10 minutes, and then cooled at 4°C for 60 minutes. Subsequently, it was braised with the seasoning liquid described above for 20 minutes to obtain a Char-siu pork-like food (Fig. 7, diameter 7 cm × 5 cm).

The Char-siu pork-like food manufactured was sampled, and as a result, it had chewiness like meat and an oily taste like fat with a good balance, and it had a texture like Char-siu pork.

## Claims

1. An animal adipose tissue-like food comprising rice flour, a vegetable protein, and a fat and/or oil.

2. The adipose tissue-like food according to claim 1, wherein the fat and/or oil contains a vegetable fat and/or oil.

3. The food according to claim 1, wherein the vegetable protein contains soy protein.

4. The food according to claim 1, wherein the vegetable protein contains soy protein isolate.

5. The food according to claim 1, wherein the content of the rice flour is 1 to 15 mass%, the content of the vegetable protein is 1 to 15 mass%, and the content of the fat and/or oil is 20 to 60 mass%.

6. The food according to claim 1, further containing starch.

7. The food according to claim 1, further containing an oligosaccharide.

8. The food according to claim 1, further containing a thickening agent.

9. A method for manufacturing the food according to any one of claims 1 to 8, comprising
a step of mixing rice flour, a vegetable protein, a fat and/or oil, and water to prepare an emulsion, and
a step of heating the emulsion to solidify it.

10. A powder composition for manufacturing the food according to any one of claims 1 to 8, containing rice flour and a vegetable protein.

11. An emulsion for manufacturing the food according to any one of claims 1 to 8, containing a vegetable protein, rice flour, a fat and/or oil, and water.

12. A processed food comprising the adipose tissue-like food according to any one of claims 1 to 8.

13. A method for manufacturing the processed food according to claim 12, comprising combining the adipose tissue-like food according to any one of claims 1 to 8 with a meat substitute.
